# EUROPEAN PATENT APPLICATION

(11) **EP 1 151 848 A1**
(43) Date of publication of application: **07.11.2001**
(21) Application number: 01110829.7
(22) Date of filing: 04.05.2001
(51) Int. Cl.: B29C 65/30, B29C 65/20

(54) **Flexible resistor for hot-blade welders**

(30) Priority: 05.05.2000 IT TO000071
(71) Applicant: COMIMPORT ITALIA S.R.L., I-10026 Santena (Torino) (IT)
(72) Inventor: Neirotti, Franco, 10026 Santena (Torino) (IT)
(74) Representative: Lotti, Giorgio

(57) **Abstract**

Equipment for hot-blade welders of the type consisting of two half shells (11, 12) which can be mechanically coupled in order to weld along their perimetrical surfaces (blades) the edges of a piece said edges having to be welded pinched between said perimetrical surfaces; respective resistors (10) which are housed in specific seats (13) of the two half shells in order to provide the welding heat to said perimetrical surfaces; the resistors (19) are flexible and plastic in order to make them take different spatial configurations and the perimetrical surfaces of the two half shells (11, 12) are basically at the same distance from the resistors in their whole perimetrical extension.

## Description

The present invention refers to an equipment for hot-blade welders.

Hot-blade welding is a technology adapted to assemble pieces that are injection moulded, rotation moulded, bubble cast or extruded. Thanks to this technology welding is easy to be realised, economical, possible to reproduce, highly resistant and perfectly tight.

The advantage of using this type of welding method comes from the fact that the method makes it possible to weld any type of thermoplastic or special materials of different size and complex geometry, and this with low investment.

Besides, it is possible to realise articles which are otherwise impossible to achieve, all at once, by means of the conventional methods for transforming plastic materials (inner cavities, multiple simultaneous welding, etc..)

In order to achieve this kind of welding, a welding equipment generally uses hot blades consisting of a block-plate or two metal half-shells (steel, bronze, aluminium, ...) defining the welding blade along the planes or their edges; located in proper seats/holes of each plate or half-shell there is a series of resistors adequately placed so that the whole mass of the block-plate or of the half-shells reaches the desired temperature.

The operating principle, that is the welding sequence, is the following:
- the two halves of the piece to be welded are positioned inside the two moulds and are locked, either mechanically and/or by means of suction. The hot blade advances and gets between the two moulds;
- the hot blade and the upper half-mould lower in order to allow the two halves of the piece to be in contact with the blade itself. Therefore, the welding area reaches the temperature of fusion;
- the upper half-mould goes up;
- the hot blade moves to the rest position;
- the upper half-shell closes so that the parts to be welded are kept in contact until cooling down.
- the upper half-sell opens and the welded piece is removed.

Current welding equipment often present very complex profiles the welding edges of which lay not on planes but in space. Therefore the hot blades, or the half-shells, housing the resistors, present welding edges which are partially near to, and partially far from, the resistor housed in the plate or in the half-shell, their size being larger then needed.

For this reason, in order to achieve a complete perimetrical welding of the piece it is often necessary to provide a great amount of heat/power so that the welding temperature is achieved also at the points, or parts, which are relatively far from the resistors as well as at the parts which are not necessary to the welding, said temperature being higher than the temperature needed for the points or parts which are quite near to the resistors.

It is therefore rather difficult to realise adequately shaped block plates or half-shells and in the case of failure or breaking of the resistors it is complicated to replace them, since they are rigid pieces, accurately inserted into seats of complex shape inside the plates or the half-shells.

Besides, being provided with rigid resistors, the block plates or the half-shells are solid bodies, that is, bodies the surface of which is continuous both along the welding edges and inside the edges; in this way the heat of the resistors reaches also the inner surface and this one transmits its own heat to the central body of the piece to be manufactured.

It is quite frequent that this heat causes overheating and damages/opacity to the surface of the piece even if it would be better to avoid such inconvenience.

It is an object of the present invention to reduce and possibly eliminate the aforementioned drawbacks.

In order to achieve this object, the invention provides equipment for hot-blade welders of the type consisting of two half shells that can be mechanically coupled so that along their perimetrical surfaces the edges of a piece to be welded (ring blade, hollowed inside) can be welded. The respective resistors being positioned in adequate seats of the two half-shells in order to provide the welding heat to said perimetrical surfaces, are characterised in that the resistors are flexible and plastic so that they can assume different spatial configurations and the perimetrical surfaces of the two half-shells are basically at the same distance from the resistor at any point of their perimeter, thus achieving a constant temperature at the areas which are in contact with the pieces to be welded.

In the following the object of the invention is described with reference to the appended drawings, in which:

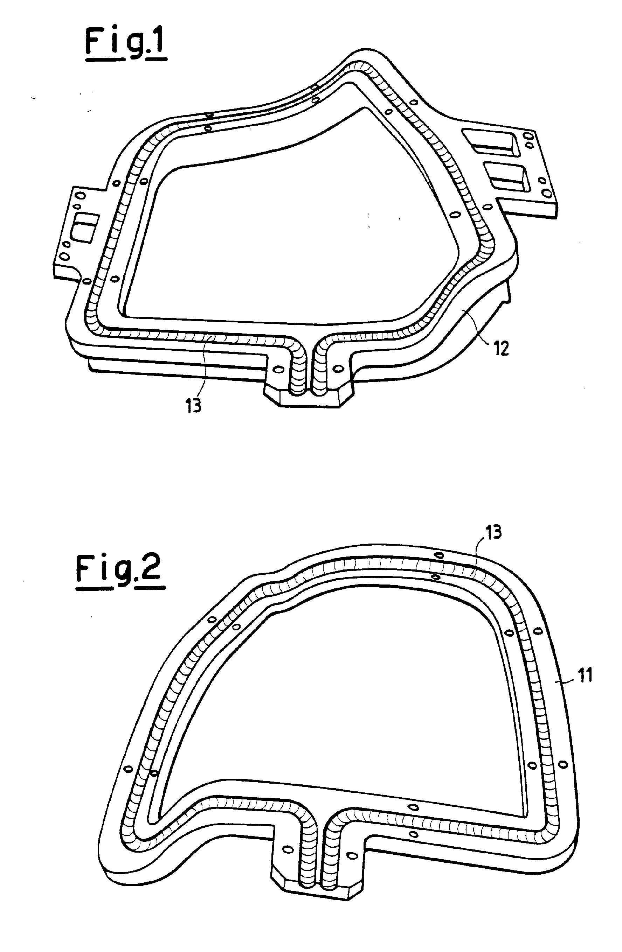

figure 1 and 2 are views of the two half-shells of the hot blade according to the invention;
figure 3 is a view of a resistor for the equipment according to the invention;
figure 4 is a view of a complete hot blade according to the invention.

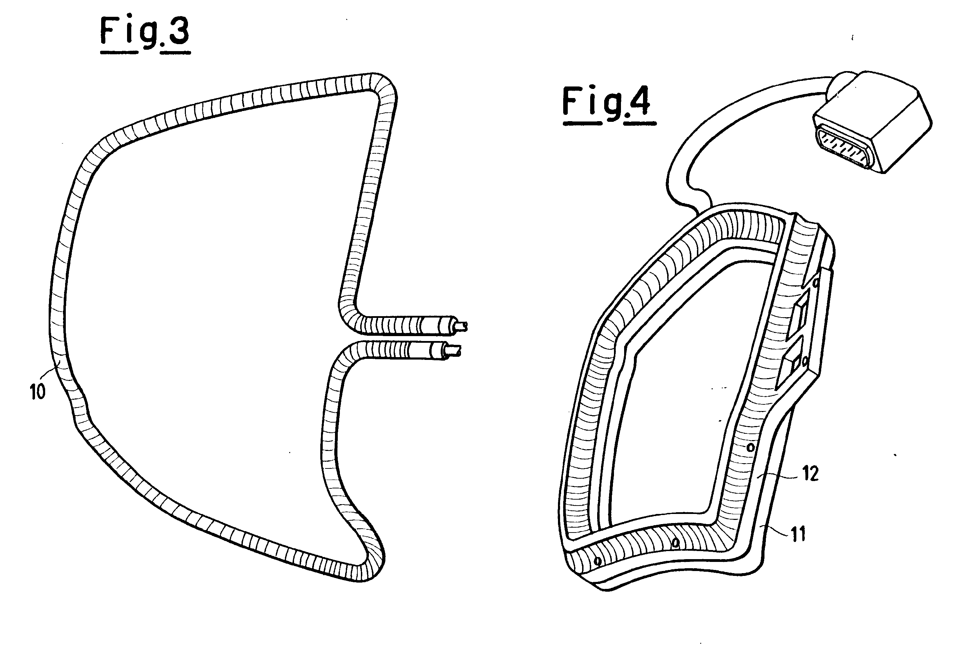

As it can be seen in figure 3, the resistor 10 used in the equipment according to the invention, is flexible and plastic so that it can assume different spatial configurations.

By means of this resistor, the half-shells 11 and 12 can consist only of a perimetrical profile of any spatial configuration, since the resistor 10 is easily housed in the seat 13. Figure 4 shows the condition in which the harf-shells 11 and 12 are coupled in order to achieve the welding along the edges of the piece to be welded.

As it can easily be seen, the profiles of the half-shells 11 and 12 can be configured in such a way that the respective resistor 10 be always at the same distance from its welding edge, thus assuring the same temperature at any point or part and saving part of the energy supplied by the resistors.

Besides, since said resistors are flexible it is possible to replace them easily when needed (failures, warn out, etc...).

It is easily understood that the heating takes place only at the welding areas so that the plastic part to be assembled is not subject to unnecessary heat shocks and the power installed is significantly lower since the mass of the hot-blades is highly reduced.

## Claims

1. Equipment for hot-blade welders of the type consisting of two half shells (11, 12) which can be mechanically coupled in order to weld along their perimetrical surfaces (blades) the edges of a piece to be welded pinched between said perimetrical surfaces; respective resistors (10) which are housed in specific seats (13) of the two half shells in order to provide the welding heat to said perimetrical surfaces, **characterised in that** the resistors (19) are flexible and plastic in order to make them take different spatial configurations and the perimetrical surfaces of the two half shells (11, 12) are basically at the same distance from the resistors in their whole perimetrical extension.

2. Equipment for hot-blade welders as claimed in claim 1 **characterised in that** each one of the two half-shells (11, 12) consist of a close, hollow, ring profile defining both the seat (13) for the respective resistor and the perimetrical surface adapted to be coupled to the corresponding one of the other half-shell.

3. Equipment for hot-blade welders as claimed in claim 2 **characterised in that** the welding heat is limited to the profile of the two segments thus avoiding unnecessary power consuming and/or heating of the pieces to be welded at parts which take no part in welding.
